(19) Europäisches Patentamt
European Patent Office
Office européen des brevets

(11) **EP 4 340 053 A1**

(12) **EUROPEAN PATENT APPLICATION**

(43) Date of publication:
**20.03.2024 Bulletin 2024/12**

(21) Application number: **23187503.0**

(22) Date of filing: **25.07.2023**

(51) International Patent Classification (IPC):
*H01M 4/04* (2006.01)  *H01M 4/1393* (2010.01)
*H01M 4/1395* (2010.01)  *H01M 4/133* (2010.01)
*H01M 4/134* (2010.01)  *H01M 10/052* (2010.01)
*H01M 10/0562* (2010.01)  *H01M 10/0585* (2010.01)
*H01M 4/62* (2006.01)  *H01M 10/42* (2006.01)
*H01M 4/02* (2006.01)  *H01M 4/66* (2006.01)

(52) Cooperative Patent Classification (CPC):
**H01M 10/0585; H01M 4/0445; H01M 4/133;
H01M 4/134; H01M 4/1393; H01M 4/1395;
H01M 4/622; H01M 10/052; H01M 10/0562;
H01M 10/4235;** H01M 4/667; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 KR 20220116628**

(71) Applicant: **Samsung Electronics Co., Ltd.**
**Suwon-si, Gyeonggi-do 16677 (KR)**

(72) Inventors:
• **ROEV, Victor**
  **16678 Suwon-si (KR)**
• **KIM, Jusik**
  **16678 Suwon-si (KR)**
• **LEE, Myungjin**
  **16678 Suwon-si (KR)**

(74) Representative: **Elkington and Fife LLP**
**Prospect House**
**8 Pembroke Road**
**Sevenoaks, Kent TN13 1XR (GB)**

(54) **ALL-SOLID BATTERY AND METHOD OF MANUFACTURING THE SAME**

(57)    An all-solid battery including a cathode including a cathode active material layer; an anode including an anode current collector, and an interlayer disposed on the anode current collector; and a solid electrolyte layer disposed between the cathode and the anode, the solid electrolyte layer including a porous first surface facing the anode, and an opposite second surface, wherein the interlayer of the anode faces the solid electrolyte layer, and the interlayer includes a water-soluble first layer and a second layer disposed on the first layer, the second layer facing the anode current collector, wherein the first layer includes a first binder on at least a portion of the porous first surface of the solid electrolyte layer, and wherein the second layer includes an organic second binder.

FIG. 1A

EP 4 340 053 A1

**Description**

FIELD OF THE INVENTION

The disclosure relates to an all-solid battery and a method of manufacturing the same.

BACKGROUND OF THE INVENTION

In order to develop a battery with high energy density and safety, a lithium battery using a solid electrolyte instead of a combustible organic solvent electrolyte solution, that is, an all-solid-state battery, has been proposed. In such an all-solid battery, lithium or a lithium alloy is used as an anode active material layer, or an anode active material layer is not formed on an anode current collector.

In general, an all-solid battery is manufactured using a cold isostatic pressing (CIP) method and/or a warm (hot) isostatic pressing (WIP) method. However, in an all-solid battery manufactured using these methods, a gap region or a void exists due to high pressure and a temperature difference between an anode current collector and a solid electrolyte layer after assembly. As a result, the charge/discharge characteristics, such as coulombic efficiency and cycle characteristics, of the all-solid battery, may be affected.

Therefore, there is a demand for an improved all-solid battery, and a method of manufacturing the same.

SUMMARY OF THE INVENTION

Provided is an all-solid battery having a new structure with improved charge/discharge characteristics by improving a contact between an anode current collector and a solid electrolyte layer.

Provided is a method of manufacturing the all-solid battery.

Additional aspects will be set forth in part in the description which follows and, in part, will be apparent from the description, or may be learned by practice of the presented embodiments of the disclosure.

According to an aspect of the disclosure, an all-solid battery includes

a cathode including a cathode active material layer,
an anode including an anode current collector, and an interlayer disposed on the anode current collector, and
a solid electrolyte layer disposed between the cathode and the anode, the solid electrolyte layer including a porous first surface facing the anode, and an opposite second surface,
wherein the interlayer of the anode faces the solid electrolyte layer, and the interlayer includes a first layer and a second layer disposed on the first layer, the second layer facing the anode current collector, wherein the first layer includes a water-soluble first binder on at least a portion of the porous first surface of the solid electrolyte layer, and wherein the second layer includes an organic second binder.

The second surface of the solid electrolyte layer may face the cathode and may be porous.

The first binder may include of polyvinyl alcohol, polyacrylic acid, polymethacrylic acid, polyvinyl alcohol grafted polyacrylic acid (i.e. polyvinyl alcohol grafted with polyacrylic acid), polyvinyl alcohol grafted polymethacrylic acid (i.e. polyvinyl alcohol grafted with polyacrylic acid), carboxymethylcellulose, polyimide, a copolymer thereof, or a combination thereof.

The first layer may be a continuous layer disposed on the first surface of the solid electrolyte layer, and the second layer may be a continuous layer disposed between the first layer and the anode current collector.

The porous first surface of the solid electrolyte layer may include a pore which may be filled 50 percent or greater with the first layer of the interlayer, based on a total porosity of the porous first surface of the solid electrolyte layer.

The pores in the solid electrolyte layer may be completely filled with the first layer of the interlayer.

An amount of the first binder may be about 1 weight percent to about 20 weight percent, based on 100 weight percent of the first layer.

The second binder may include polyvinylidene fluoride, a copolymer of vinylidene fluoride and hexafluoropropylene, polyisobutylene, polyethylene, polypropylene, a copolymer thereof, or a combination thereof.

An amount of the second binder may be about 1 weight percent to about 15 weight percent, based on 100 weight percent of the second layer.

The first layer and the second layer may each independently further include

a metal or metalloid including silver, gold, platinum, palladium, silicon, aluminum, bismuth, tin, zinc, or a combination thereof;
a carbon material including carbon black, acetylene black, furnace black, ketjen black, graphite, graphene, a single-walled carbon nanotube, a double-walled carbon nanotube, or a multi-walled carbon nanotube, or a combination thereof; or

a combination of the carbon material and the metal or the metalloid.

Each of the first layer and the second layer may have a thickness in a range of about 1 micrometer to about 30 micrometers.

The solid electrolyte layer may include an oxide solid electrolyte, a sulfide solid electrolyte, a polymeric solid electrolyte, or a combination thereof.

The solid electrolyte layer may include $Li_{i+x+y}Al_xTi_{2-x}Si_yP_{3-y}O_{12}$ (where 0<x<2 and 0≤y<3), $BaTiO_3$, $Pb(Zr_{p}$-$Ti_{i-p})O_3$ (PZT) (where 0≤p≤1), $Pb_{1-x}La_xZr_{1-y}Ti_yO_3$ (PLZT) (where 0≤x<1 and 0≤y<1), $Pb(Mg_{1/3}Nb_{2/3})O_3$-$PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where 0<x<2 and 0<y<3), $Li_xAl_yTi_z(PO_4)_3$ (where 0<x<2, 0<y<1, and 0<z<3), $Li_{1+x+y}(Al_pGa_{1-p})_x(Ti_qGe_{1-q})_{2-x}Si_yP_{3-y}O_{12}$ (where 0≤x≤1, 0≤y≤1, 0≤p≤1 and 0≤q≤1), $Li_xLa_yTiO_3$ (where 0<x<2 and 0<y<3), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (where M is Te, Nb, or Zr, and x is an integer from 1 to 10), or a combination thereof.

The cathode active material layer may include lithium cobalt oxide, lithium nickel oxide, lithium nickel cobalt oxide, lithium nickel cobalt aluminum oxide, lithium nickel cobalt manganese oxide, lithium manganese oxide, lithium iron phosphate oxide, nickel sulfide, copper sulfide, lithium sulfide, iron oxide, vanadium oxide, or a combination thereof.

The cathode active material layer may further include an ionic liquid electrolyte.

A pore in the second surface of the solid electrolyte layer that is in contact with the cathode active material layer may be filled with the ionic liquid electrolyte.

The anode current collector may include copper, aluminum, nickel, titanium, cobalt, or stainless steel.

After charging the battery, the first layer and the second layer may each independently include a metal or metalloid, a carbon material, an alloy thereof with lithium, and a composite thereof, or a combination thereof.

The battery may include a thin-film multi-layer battery, a multi-layer ceramic (MLC) battery, a lithium-sulfur battery, or a lithium-air battery.

According to another aspect of the disclosure, a method of manufacturing an all-solid battery includes:

providing a molded body for a solid electrolyte layer;

acid-treating the molded body;

drying the acid-treated molded body to obtain a solid electrolyte layer including a porous first surface and optionally a porous second surface thereof;

applying a first binder-containing composition on at least a portion of the porous first surface of the solid electrolyte layer to form a first layer, wherein the first binder-containing composition comprises an aqueous solution of the first binder;

disposing an organic second binder-containing composition on the first layer to form a second layer;

disposing an anode current collector on the second layer; followed by

compressing the anode current collector, the second layer, the first layer, and the solid electrolyte layer to form a compressed body in which the anode current collector, the second layer, the first layer, and the solid electrolyte layer are sequentially disposed;

drying the compressed body to obtain a laminated body;

disposing the laminated body in a pouch;

wrapping the pouch with a lithium-containing foil; followed by

lithiating the laminated body at a temperature in a range of about 25 °C to about 60 °C, to obtain a pre-lithiated laminated body;

removing the pre-lithiated laminated body from the pouch; and

disposing the solid electrolyte layer of the pre-lithiated laminated body on a cathode including a cathode active material layer, to manufacture the all-solid battery.

The acid-treatment may be performed at a concentration in a range of about 0.1 molar (M) to about 10 M for about 30 minutes to about 1 hour.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A is a schematic cross-sectional view of an embodiment of an all-solid battery;

FIG. 1B is a schematic cross-sectional view of an embodiment of an all-solid battery;

FIG. 2 is a flowchart describing an embodiment of a method of manufacturing an all-solid battery along with a method of manufacturing an anode and a solid electrolyte layer;

FIG. 3 is a flowchart schematically describing an embodiment of a method of manufacturing an all-solid battery;

FIG. 4A is a scanning electron microscopic image observed after disassembling an all-solid secondary battery according to Example 1;

FIG. 4B is an energy-dispersive X-ray (EDX) spectroscopic image observed after disassembling an all-solid secondary battery according to Example 1;

FIG. 4C is an EDX mapping image for carbon in an anode and a solid electrolyte layer that are prepared according to Example 1;

FIG. 5 is a graph of discharge capacity (milliampere·hours per square centimeter, mAh/cm$^2$) vs. number of cycles (times), and shows changes in discharge capacity according to the number of cycles up to 25 cycles of all-solid secondary batteries manufactured according to Examples 1 and 2 and Comparative Examples 1 to 5;

FIG. 6A is a graph of coulombic efficiency (percent, %) and discharge capacity (mAh/cm$^2$) vs. number of cycles (times), and shows changes in coulombic efficiency and discharge capacity according to the number of cycles up to 100 cycles of an all-solid secondary battery manufactured according to Example 1; and

FIG. 6B is a graph of coulombic efficiency (%) and discharge capacity (mAh/cm$^2$) vs. number of cycles (times), and shows changes in coulombic efficiency and discharge capacity according to the number of cycles up to 100 cycles of an all-solid secondary battery manufactured according to Example 2.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figure, to explain various aspects. Rather, these embodiments are provided so that this disclosure will be thorough and complete, and will fully convey the scope of the invention to those skilled in the art. As used herein, the term "and/or" includes any and all combinations of one or more of the associated listed items. Expressions such as "at least one of," when preceding a list of elements, modify the entire list of elements and do not modify the individual elements of the list.

The present inventive concept described hereinbelow may have various modifications and various embodiments, example embodiments will be illustrated in the drawings and more fully described in the detailed description. The present inventive concept may, however, should not be construed as limited to the example embodiments set forth herein, and rather, should be understood as covering all modifications, equivalents, or alternatives falling within the scope of the present inventive concept.

The terms used herein is for the purpose of describing particular embodiments only, and is not intended to be limiting the present inventive concept. An expression used in the singular encompasses the expression of the plural, unless it has a clearly different meaning in the context.

It will be understood that when an element is referred to as being "on" another element, it can be directly on the other element or intervening elements may be present therebetween. In contrast, when an element is referred to as being "directly on" another element, there are no intervening elements present.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below. The expression "at least one" or "one or more" used in front of components in the present specification is meant to supplement a list of all components means, and does not imply to supplement individual components of the description. The term "combination" used in the present specification includes, unless otherwise described, a mixture, an alloy, a reaction product, and the like. The term "include" used in the present specification does not exclude other components unless otherwise described, and means that other components may be further included. The terms such as "first," "second," etc. used in the present specification may be used to distinguish one component from another without indicating order, quantity, or importance. It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

Unless otherwise indicated or otherwise clearly described by context in the present specification, components should be construed to include both the singular and the plural. The expression "or" includes, unless otherwise specified, the meaning of "and/or".

Throughout the present specification, the term "an embodiment" or the like means that a specific component described in connection with embodiments is included in at least one embodiment described herein, and that the specific component may or may not be present in other embodiments. In addition, components described herein should be construed as being possibly combined in any suitable manner in the various embodiments.

Unless otherwise stated, all percentages, parts, ratios, and the like are by weight. In addition, when an amount, concentration, or other values or parameters are given in a range, a preferable range, or a list of preferable upper limits or preferable lower limits, it is to be understood that, regardless of whether the range is separately disclosed, all ranges formed from any upper range limits, or preferred values and any lower range limits, or any pair of preferred values should be specifically disclosed.

When a range of numerical values is stated in the present specification, unless otherwise stated, the range is intended to include the endpoints and all integers and fractions within the range. The scope of the disclosure is intended not to be limited by specific values referred when defining the range.

Unless otherwise specified, the unit "part by weight" refers to a weight ratio between each component, and the unit "part by mass" refers to a value obtained by converting a weight ratio between each component into a solid content.

The expression "about" used in the present specification includes a value stated herein, and also includes a value within an acceptable range of deviations of a specific value determined by those skilled in the art means in consideration of errors associated with corresponding measurement and measurement of specific quantity (i.e., the limit of the measuring system). For example, the expression "about" may include a value within one or more standard deviations, or a value $\pm 30$ %, $\pm 20$ %, $\pm 10$ %, or $\pm 5$ % of a specified value.

Unless otherwise defined, all terms (including technical and scientific terms) used in the present specification have the same meaning as commonly understood by those skilled in the art to which the disclosure belongs to. In addition, terms such as terms defined in commonly used dictionaries should be interpreted to have meanings consistent with the meaning in the related art and the disclosure, and should not be construed as being idealized. Alternatively, the terms should not be interpreted in an excessively formal sense.

Exemplary embodiments are described with reference to cross-sectional views that are schematic diagrams of idealized embodiments. Accordingly, the appearance of examples may vary, for example, as a result of manufacturing techniques and/or tolerances. Therefore, embodiments described herein should not be construed as being limited to the specific shape of the regions described herein, but should include, for example, variations in shape occurring during manufacturing. For example, regions illustrated or described as flat regions may generally have rough and/or non-linear characteristics. Also, an illustrated acute angle may be round. Therefore, regions illustrated in drawings are schematic in nature, and shapes thereof are not intended to illustrate the precise shape of the regions and are not intended to limit the scope of the claims.

Hereinafter, an all-solid battery and a method of manufacturing the same will be described in more detail in embodiments.

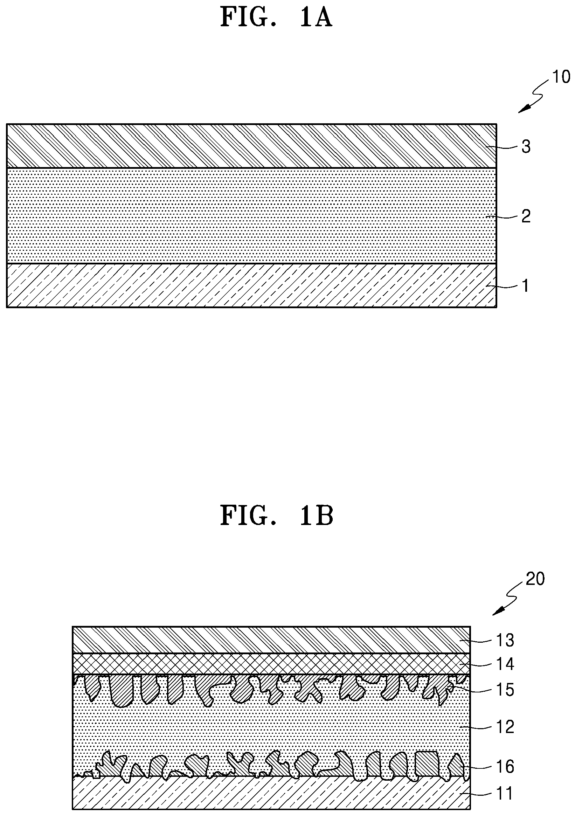

FIG. 1A is a schematic cross-sectional view of an all-solid battery according to an embodiment. An all-solid battery 10 of FIG. 1A comprises a cathode 1, an anode current collector 3 not comprising an anode active material layer, and a solid electrolyte layer 2 between the cathode 1 and the anode current collector 3. The all-solid battery 10 may have a "lithium (Li)-free" (or anode-free) structure in a pre-charge state or a discharge state. In the all-solid battery 10, a Li-metal or Li-alloy anode may be formed by electrodeposition of Li contained in the cathode 1 after charging. The all-solid battery 10 having such a structure, may undergo Li dissolution and Li deposition repeatedly during charge and discharge, and meanwhile, the interface regions between the Li-metal or Li-alloy anode and the solid electrolyte layer may increase or decrease. As a result, a void may be formed between the Li-metal or Li-alloy anode and the solid electrolyte layer.

In addition, the all-solid battery 10 having this structure may be generally manufactured through a compressing step and a heat treatment step. Here, not all interface regions between the anode current collector 3 and the solid electrolyte layer 2 may maintain a satisfactory contact. As a result, a gap region or a void exists between the anode current collector 3 and the solid electrolyte layer 2. Accordingly, the all-solid battery having this structure may adversely affect the charge/discharge characteristics, such as coulombic efficiency and cycle characteristics.

Recently, in order to solve these problems, a method of applying a silvercarbon composite anode may be used so that the discharge capacity at a low temperature may be improved and high energy density and long lifespan characteristics may be obtained. However, this method is limitedly available only to a case where the solid electrolyte layer 2 is a sulfide-based (i.e., sulfide) solid electrolyte.

The inventors disclose an all-solid battery having a novel structure and a method of manufacturing the same, the all-solid battery having improved charge/discharge characteristics by improving a contact between the anode current collector and the solid electrolyte layer. Also, the all-solid battery is compatible with having various solid electrolyte layers, such as an oxide-based (i.e., oxide) solid electrolyte, or a polymer solid electrolyte, in addition to the sulfide-based solid electrolyte.

An all-solid battery according to an embodiment may include: a cathode including a cathode active material layer; an anode including an anode current collector, and an interlayer disposed on the anode current collector; and a solid electrolyte layer disposed between the cathode and the anode, the solid electrolyte layer including a porous first surface facing the anode, and an opposite second surface, wherein the interlayer of the anode faces the solid electrolyte layer, and the interlayer includes a first layer and a second layer disposed on the first layer, the second layer facing the anode current collector, wherein the first layer includes a water-soluble first binder on at least a portion of the porous first surface of the solid electrolyte layer, and wherein the second layer includes an organic second binder.

The second surface of the solid electrolyte layer may be facing the cathode and may be porous.

By improving a contact between the anode current collector and the solid electrolyte layer, the all-solid battery according to an embodiment may improve the charge/discharge characteristics.

FIG. 1B is a schematic cross-sectional view of an all-solid battery 20 according to an embodiment. As shown in FIG. 1B, the all-solid battery 20 may have a "Li-free" (or anode-free) structure in a pre-charge state or a discharge state. The all-solid battery 20 may comprise, a cathode 11 including a cathode active material layer, an anode current collector 13, and a solid electrolyte layer 12 disposed between the cathode 11 and the anode current collector 13, and the solid electrolyte layer 12 having pores. Between the anode current collector 13 and the solid electrolyte layer 12 having a porous first surface, an interlayer comprising a first layer 15 and a second layer 14 may be disposed.

The first layer 15 may be a continuous layer or a non-continuous layer and include a first binder on at least a portion of the porous first surface of the solid electrolyte layer 12. Here, the term "continuous layer" refers to a layer connected in one direction. Here, the term "non-continuous layer" refers to a layer not connected in one direction.

The first binder may be a water-soluble binder. When the solid electrolyte layer 12 includes an oxide solid electrolyte, the first layer 15 may improve the binding force with the solid electrolyte layer 12 while avoiding a direct contact with the second layer 14 including an organic-based (i.e., organic) second binder that is highly reactive to the solid electrolyte layer 12. In addition, the first layer 15 may reduce an amount of the binder due to the excellent binding force, and may be environmentally friendly by using water as a solvent.

The first binder may comprise polyvinyl alcohol, polyacrylic acid, polymethacrylic acid, polyvinyl alcohol grafted polyacrylic acid, polyvinyl alcohol grafted polymethacrylic acid, carboxymethylcellulose, polyimide, or a copolymer thereof, or a combination thereof. If desired, the first binder may further comprise butadiene rubber, nitrilebutadiene rubber, hydrogenated nitrile-butadiene rubber, styrene-butadiene rubber, styrene-butadiene-styrene rubber, acrylate-butadiene rubber, acrylonitrile-butadiene-styrene rubber, or a combination thereof. For example, the first binder may include a polymer of polyvinyl alcohol, polyacrylic acid, polymethacrylic acid, polyvinyl alcohol-grafted polyacrylic acid, polyvinyl alcohol-grafted polymethacrylic acid, or a copolymer thereof. For example, the first binder may include a polymer of polyvinyl alcohol-grafted polyacrylic acid, polyvinyl alcohol-grafted polymethacrylic acid, or a copolymer thereof. Such a grafted polymer or a copolymer thereof may have not only improved binding force, but also excellent elasticity, compared to a linear polymer, or a copolymer thereof. Accordingly, in a battery including the grafted polymer or a copolymer thereof as a first binder in the anode, the charge/discharge characteristics, such as coulombic efficiency and cycle characteristics, may be further improved.

The first layer 15 may be a continuous layer disposed along the surface of the solid electrolyte layer 12. By applying the first binder-containing composition that is wet in an aqueous solution or suspension state to the surface of the solid electrolyte layer, a continuous layer may be formed so that the first layer 15 may form a stronger intercalation bond with the second layer 14. The porous first surface of the solid electrolyte layer 12 may comprise a pore which may be filled greater than or equal to 50 %, greater than or equal to 55 %, greater than or equal to 60 %, greater than or equal to 65 %, greater than or equal to 70 %, greater than or equal to 75 %, greater than or equal to 80 %, greater than or equal to 85 %, greater than or equal to 90 %, or greater than or equal to 95 %, with the first layer 15 of the interlayer, based on a total porosity of the porous first surface of the solid electrolyte layer 12. The porosity may be determined by scanning electron microscopy. For example, the pore of the solid electrolyte layer 12 may be completely filled with the first layer 15. The pore of the solid electrolyte layer 12 may be easily penetrated due to the first binder-containing composition having good wettability, to form the first layer 15, and in this regard, the contact area with the solid electrolyte layer 12 may be increased.

An amount of the first binder may be about 1 weight percent (wt%) to about 20 wt%, based on 100 wt% of the first layer 15. For example, the amount of the first binder may be, in a range of about 1 wt% to about 18 wt%, about 1 wt% to about 16 wt%, about 1 wt% to about 14 wt%, about 1 wt% to about 12 wt%, about 1 wt% to about 10 wt%, about 1 wt% to about 9 wt%, about 1 wt% to about 8 wt%, or about 1 wt% to about 7 wt%, based on 100 wt% of the first layer 15. When the amount of the first binder is within the ranges above, the all-solid battery 20 may have improved charge/discharge characteristics by improving the binding force with the solid electrolyte layer 12.

The second layer 14 may be disposed on the first layer 15. The second layer 14 may contact a first surface of the anode current collector 13. The second layer 14 may be a continuous layer disposed between the first layer 15 and the anode current collector 13. The second layer 14 may have good adhesion with the anode current collector 13 and good contact with the first layer 15.

The second layer 14 may include an organic-based second binder. The second binder may include polyvinylidene fluoride, a copolymer of vinylidene fluoride and hexafluoropropylene, polyisobutylene, polyethylene, polypropylene, or a copolymer thereof, or a combination thereof. For example, the second binder may be polyvinylidene fluoride, or a copolymer of vinylidene fluoride and hexafluoropropylene. The organic-based second binder of the second layer 14 may have not only excellent adhesion with the anode current collector 13, but also high chemical resistance to an organic solvent and excellent electrochemical oxidation/reduction stability.

An amount of the second binder may be about 1 wt% to about 15 wt%, based on 100 wt% of the second layer 14. For example, the amount of the second binder may be, in a range of about 1 wt% to about 14 wt%, about 1 wt% to about 13 wt%, about 1 wt% to about 11 wt%, about 1 wt% to about 9 wt%, or about 1 wt% to about 7 wt%, based on 100 wt% of the second layer 14. When the amount of the second binder is within the ranges above, the all-solid battery 20 may have improved charge/discharge characteristics by improving the adhesion with the anode current collector 13 and the binding force with the first layer 15 simultaneously.

In an embodiment, when the solid electrolyte layer 12 includes an oxide solid electrolyte, and only the second layer 14 is positioned as the interlayer between the solid electrolyte layer 12 and the anode current collector 13, the binding force between the solid electrolyte layer 12 and the anode current collector 13 may be reduced due to high reactivity to the organic-based binder. As a result, a short circuit may occur during charge and discharge of the all-solid battery 20.

The all-solid battery 20 according to an embodiment may include the interlayer disposed between the solid electrolyte layer 12 and the anode current collector 13, and the interlayer including the first layer 15 and the second layer 14. In this regard, even when the solid electrolyte layer 12 includes an oxide solid electrolyte, the charge/discharge characteristics may be improved by providing a tighter contact during the charge and discharge.

The first layer 15 and the second layer 14 may each independently further include: a metal or metalloid including silver, gold, platinum, palladium, silicon, silver, aluminum, bismuth, tin, zinc, or a combination thereof; a carbon material including carbon black, acetylene black, furnace black, ketjen black, graphite, graphene, a single-walled carbon nanotube, a double-walled carbon nanotube, a multi-walled carbon nanotube, or a combination thereof; or a combination of the metal or metalloid and the carbon material. By further including the above material in the first layer 15 and the second layer 14, the charge/discharge characteristics, such as cycle characteristics, of the all-solid battery 20 may be improved.

The metal or metalloid and the carbon material included in the first layer 15 and the second layer 14 may have a particle shape, and an average particle diameter (D50) of less than or equal to about 4 micrometers ($\mu$m), less than or equal to about 3 $\mu$m, less than or equal to about 2 $\mu$m, less than or equal to about 1 $\mu$m, or less than or equal to about 0.5 $\mu$m. The lower limit of the average particle diameter D50 is not particularly limited, but may be greater than or equal to about 10 nm. The average particle diameter D50 refers to a particle size value corresponding to 50 % from the smallest particle when the total number of particles is 100 % in a distribution curve accumulated in order from the smallest particle size to the largest particle size. The average particle diameter D50 may be measured by a method well known to those skilled in the art, and for example, may be also measured using a particle size analyzer or through a transmission electron microscope (TEM) or scanning electron microscope (SEM) image. Alternatively, after measuring using a measuring device using dynamic light-scattering, performing data analysis, counting the number of particles for each particle size range, and then calculating, the average particle diameter D50 value may be easily obtained. Here, a weight ratio of the metal or metalloid to the carbon material in the mixture may be, for example, in a range of about 10:1 to about 1:2, about 5:1 to about 1:1, or about 4:1 to about 2:1, but is not necessarily limited thereto. The weight ratio may be chosen according to the characteristics of the all-solid secondary battery 20.

The first layer 15 and the second layer 14 may further include a polymer, for example, an electroconductive polymer.

Examples of the electroconductive polymer include poly(fluorene), polyphenylene, polypyrene, polyazulene, polynaphthalene, polyacetylene (PAC), poly(p-phenylenevinylene) (PPV), polypyrrole (PPY), polycarbazole, polyindole, polyazepine, polyaniline (PANI), polythiophene (PT), poly(3,4-ethylenedioxythiophene) (PEDOT), or poly(p-phenylenesulfide) (PPS). By further including the electroconductive polymer in the first layer 15 and the second layer 14, the charge/discharge characteristics, such as coulombic efficiency and cycle characteristics, of the all-solid battery 20 may be further improved.

Each of the first layer 15 and the second layer 14 may have a thickness in a range of about 1 $\mu$m to about 30 $\mu$m. For example, each of the first layer 15 and the second layer 14 may have a thickness in a range of about 1 $\mu$m to about 28 $\mu$m, about 1 $\mu$m to about 26 $\mu$m, about 1 $\mu$m to about 24 $\mu$m, about 1 $\mu$m to about 22 $\mu$m, about 1 $\mu$m to about 20 $\mu$m, about 1 $\mu$m to about 18 $\mu$m, about 1 $\mu$m to about 16 $\mu$m, about 1 $\mu$m to about 14 $\mu$m, about 1 $\mu$m to about 12 $\mu$m, about 1 $\mu$m to about 10 $\mu$m, about 1 $\mu$m to about 8 $\mu$m, about 1 $\mu$m to about 6 $\mu$m, or about 1 $\mu$m to about 5 $\mu$m. The thickness of the first layer 15 and the second layer 14 may be adjusted within the ranges above in consideration of the charge/discharge characteristics of the all-solid battery 20 including the anode and the solid electrolyte layer 12.

After charging the all-solid battery 20, the first layer 15 and second layer 14 may each independently include a metal or metalloid, a carbon material, an alloy thereof with lithium, a composite thereof, or a combination thereof. An example of the alloy of these materials with lithium or the composite of these materials may include lithium and silver, gold, platinum, palladium, silicon, aluminum, bismuth, tin, zinc, $LiC_6$, or a combination thereof.

The anode current collector 13 may be formed of a material that does not react with lithium, that is, a material that forms neither an alloy nor a compound (e.g., composite) with lithium. An example of the anode current collector 13 may include copper (Cu), nickel (Ni), titanium (Ti), cobalt (Co), or stainless steel. The anode current collector 13 may be formed of one or an alloy of two or more of the above-described metals, or a coating material. The anode current collector 13 may have a plate shape or a foil shape.

The solid electrolyte layer 12 may include an oxide-based solid electrolyte, a sulfide-based solid electrolyte, a polymeric solid electrolyte, or a combination thereof.

For example, the solid electrolyte layer 12 may include an oxide-based solid electrolyte. The oxide-based solid electrolyte may include $Li_{1+x+y}Al_xTi_{2-x}Si_yP_{3-y}O_{12}$ (where 0<x<2 and 0≤y<3), $BaTiO_3$, $Pb(Zr_pTi_{1-p})O_3$ (PZT) (where 0≤p≤1), $Pb_{1-x}La_xZr_{1-y}Ti_yO_3$ (PLZT) (where 0≤x<1 and 0≤y<1), $Pb(Mg_{1/3}Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where 0<x<2 and 0<y<3), $Li_xAl_yTi_z(PO_4)_3$ (where 0<x<2, 0<y<1, and 0<z<3), $Li_{1+x+y}(Al_pGa_{1-p})_x(Ti_qGe_{1-q})_{2-x}Si_yP_{3-y}O_{12}$ (where 0≤x≤1, 0≤y≤1, 0≤p≤1 and 0≤q≤1), $Li_xLa_yTiO_3$ (where 0<x<2 and 0<y<3), $Li_2O$, $LiOH$, $Li_2CO_3$, $LiAlO_2$, $Li_2O-Al_2O_3-SiO_2-P_2O_5-TiO_2-GeO_2$, and $Li_{3+x}La_3M_2O_{12}$ (where M is Te, Nb, or Zr, and x is an integer from 1 to 10), or a combination thereof. The oxide-based solid electrolyte may be prepared by a sintering method. For example, the oxide-based solid electrolyte may include a garnet-type solid electrolyte of $Li_7La_3Zr_2O_{12}$ (LLZO), $Li_{3+x}La_3Zr_{2-a}M_aO_{12}$ (M-doped LLZO) (where M may be Ga, W, Nb, Ta, or Al, 0<a<2, and x may be an integer from 1 to 10), or a combination thereof. The garnet-type solid electrolyte may have ion conductivity of greater than or equal to 1 milliSiemen per centimeter (mS cm$^{-1}$), and may be manufactured in the form of pellets, tapes, and films. The garnet-type solid electrolyte may be manufactured to have various thicknesses in a wide temperature range.

The sulfide-based solid electrolyte may not be particularly limited as long as it contains sulfur (S) or a sulfur-based compound (e.g., $S_xSe_y$, or $S_xTe_y$, where x and y are each a positive number) and has ionic conductivity. The sulfide-based solid electrolyte may include $Li_2S-P_2S_5$, $Li_2S-P_2S_5-LiX$ (where X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are each a positive number, and Z is one of Ge, Zn, or Ga), $Li_2S-GeS_2$, $Li_2S-SiS_2-Li_3PO_4$, and $Li_2S-SiS_2-Li_pMO_q$ (where p and q are each a positive number, and M is one of P, Si, Ge, B, Al, Ga, or In). When a material including $Li_2S-P_2S_5$ is used as a material for forming the sulfide-based solid electrolyte, a molar ratio of $Li_2S$ to $P_2S_5$ may be selected in a range of about 50:50 to about 90:10, or may be selected in a range of about 60:40 to about 90:10, or may be selected in a range of about 75:25 to about 90:10. The sulfide-based solid electrolyte may be prepared by treating a raw starting material (e.g., $Li_2S$, or $P_2S_5$) by a melt quenching method, or a mechanical milling method. Also, a calcination process may be performed after the treatment.

Examples of the polymer solid electrolyte may include polyether, graft polyether, or polysiloxane, and the ionic conductivity of these electrolytes may be achieved by local segmental motion of polymers. The polymer solid electrolyte may be prepared by mixing polyether with a plasticizer salt, and sometimes some liquid plasticizers. By using such an electrolyte, a thin film may be prepared by a solvent evaporation coating method. However, the electrolyte is not limited thereto, and any polymer solid electrolyte available in the art may be used.

The cathode 11 includes a cathode current collector and a cathode active material layer. As the cathode current collector, a metal substrate may be used. Examples of the metal substrate may include aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector may have a plate shape or a foil shape. The cathode current collector may be omitted.

As the cathode active material of the cathode active material layer, any suitable material for a lithium battery in the art may be used without limitation. For example, the cathode active material may include a composite oxide of lithium, and Co, Mn, Ni, or a combination thereof, and examples thereof include a compound represented by the following formulae: $Li_aA_{1-b}B'_bD'_2$ (where 0.90 ≤ a ≤ 1.8 and 0 ≤ b ≤ 0.5); $Li_aE_{1-b}B'_bO_{2-c}D'_c$ (where 0.90 ≤ a ≤ 1.8, 0 ≤ b ≤ 0.5, and c ≤ 0.05); $LiE_{2-b}B'_bO_{4-c}D'_c$ (where 0 ≤ b ≤ 0.5 0 ≤ c ≤ 0.05); $Li_aNi_{1-b-c}Co_bB'_cD'_\alpha$ (where 0.90 ≤ a ≤ 1.8, 0 ≤ b ≤ 0.5, 0 ≤ c ≤ 0.05, and 0 < α ≤ 2); $Li_aNi_{1-b-c}Co_bB'_cO_{2-\alpha}F'_\alpha$ (where 0.90 ≤ a ≤ 1.8, 0 ≤ b ≤ 0.5, 0 ≤ c ≤ 0.05, and 0 < α < 2);

$Li_aNi_{1-b-c}Co_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); $LiFePO_4$, or a combination thereof. In the formulae above, A may be Ni, Co, Mn, or a combination thereof; B' may be Al, Ni, Co, Mn, Cr, Fe, Mg, Sr, V, a rare earth element, or a combination thereof; D' may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. For example, the cathode active material may include lithium cobalt oxide, lithium nickel oxide, lithium nickel cobalt oxide, lithium nickel cobalt aluminum oxide, lithium nickel cobalt manganese oxide, lithium manganese oxide, lithium iron phosphate oxide, nickel sulfide, copper sulfide, lithium sulfide, iron oxide, vanadium oxide, or a combination thereof. For example, the cathode active material may include $LiCoO_2$, $LiMn_xO_{2x}$ (where x=1 or 2), $LiNi_{1-x}Mn_xO_{2x}$ (where 0<x<1), $LiNi_{1-x-y}Co_xMn_yO_2$ (where $0 \leq x \leq 0.5$ and $0 \leq y \leq 0.5$), $LiFePO_4$, $TiS_2$, $FeS_2$, $TiS_3$, $FeS_3$, or a combination thereof.

The cathode active material layer may further include an ionic liquid electrolyte 16. The ionic liquid electrolyte 16 may be non-volatile. The ionic liquid electrolyte 16 may include an ionic liquid and a polymer ionic liquid. The ionic liquid may have a melting point below the room temperature, and may refer to a salt in a liquid state at room temperature or a molten salt at room temperature, each consisting of only ions. The ionic liquid may include a compound including: a) a cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a mixture thereof; and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, $(CF_3SO_2)_2N^-$, or a combination thereof. For example, the ionic liquid may include N-methyl-N-propylpyrrolidinium bis(trifluoromethanesulfonyl)imide, N-butyl-N-methylpyrrolidinium bis(3-trifluoromethylsulfonyl)imide, 1-butyl-3-methylimidazolium bis(trifluoromethylsulfonyl)imide, 1-ethyl-3-methylimidazolium bis(trifluoromethylsulfonyl)imide, or a combination thereof. The polymer ionic liquid may include a repeating unit including: a) a cation of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a mixture thereof; and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, $(O(CF_3)_2C_2(CF_3)_2O)_2PO^-$, or a combination thereof.

The pores (i.e., pore) in the surface (i.e., second surface) of the solid electrolyte layer that is in contact with the cathode active material layer may be filled with the ionic liquid electrolyte. An amount of the ionic liquid electrolyte may be, in a range of about 0.1 part by weight to about 20 parts by weight, about 0.1 part by weight to about 15 parts by weight, about 0.1 part by weight to about 10 parts by weight, or about 0.1 part by weight to about 5 parts by weight, based on 100 parts by weight of a cathode active material layer not including the ionic liquid electrolyte. By including the ionic liquid electrolyte, the charge/discharge characteristics of a battery may be improved by improving the ionic conductivity.

The cathode active material layer may further include a conductive material, and a binder. The conductive material may include, for example, carbon black, carbon fiber, graphite, or a combination thereof. The carbon black may include, for example, acetylene black, ketjen black, super P carbon black, channel black, furnace black, lamp black, thermal black, or a combination thereof. The graphite may be natural graphite, or artificial graphite. A combination including at least two of the foregoing materials may be used. The cathode active material layer may additionally include a conductive material having a different composition, in addition to the conductive material described above. Such an additional conductive material may include: an electrically conductive fiber such as a metal fiber; carbon fluoride powder; metal powder such as aluminum powder, or nickel powder; conductive whisker, such as zinc oxide or potassium titanate; a polyethylene derivative; or a combination thereof. An amount of the conductive material may be, in a range of about 1 part by weight to about 10 parts by weight, for example, about 2 parts by weight to about 7 parts by weight, based on 100 parts by weight of the cathode active material. When the amount of the conductive material is within the ranges above, for example, about 1 part by weight to about 10 parts by weight, the cathode may have appropriate electrical conductivity.

A binder may improve adhesion of components of the cathode with one another and adhesion with the current collector of the cathode. Examples of the binder include polyacrylic acid (PAA), polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene-rubber, fluorinated rubber, a copolymer thereof, or a combination thereof. An amount of the binder may be, in a range of about 1 part by weight to about 10 parts by weight, for example, about 2 parts by weight to about 7 parts by weight, based on 100 parts by weight of the cathode active material. When the amount of the binder is within the ranges above, the adhesion of the cathode active material layer with the cathode current collector may be further improved, whereas the reduction in energy density of the cathode active material layer may be suppressed.

For use as a solvent, N-methyl pyrrolidone, acetone, water, or a combination thereof, may be used. Amounts of the cathode active material, the conductive material, the binder, and the solvent may be at levels suitable for use in a lithium battery.

A plasticizer may be added to the cathode active material composition to form pores in the cathode active material layer.

The all-solid battery 20 may include a thin-film multi-layer battery, a multi-layer ceramic (MLC) battery, a lithium-sulfur battery, or a lithium-air battery. For example, the all-solid battery 20 may be an all-solid secondary battery.

Another aspect of the disclosure provides a method of manufacturing an all-solid battery, the method including: providing a molded body; acid-treating the molded body; drying the acid-treated molded body to obtain a solid electrolyte layer having a porous first surface; applying a first binder-containing composition on at least a portion of the porous first surface of the solid electrolyte layer to form a first layer, wherein the first binder-containing composition comprises an aqueous solution of the first binder; disposing an organic second binder-containing composition on the first layer to form a second layer; disposing an anode current collector on the second layer; followed by compressing the anode current collector, the second layer, the first layer, and the solid electrolyte layer to form a compressed body in which the anode current collector, the second layer, the first layer, and the solid electrolyte layer are sequentially disposed; drying the compressed body to obtain a laminated body; disposing the laminated body in a pouch; wrapping the pouch with a lithium-containing foil; followed by lithiating the laminated body at a temperature in a range of about 25 °C to about 60 °C, to obtain a pre-lithiated laminated body; removing the pre-lithiated laminated body from the pouch; and disposing the solid electrolyte layer of the pre-lithiated laminated body on a cathode including a cathode active material layer er, to manufacture the all-solid battery. When the all-solid battery is manufactured by the method described above, the all-solid battery having improved charge/discharge characteristics by improving the contact between the anode current collector and the solid electrolyte layer may be provided.

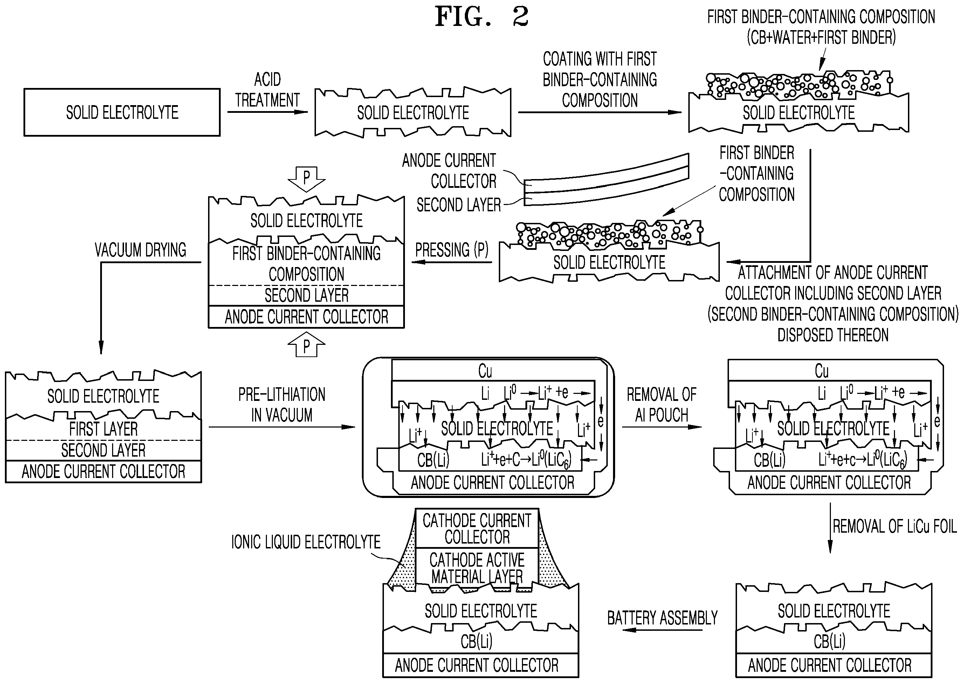

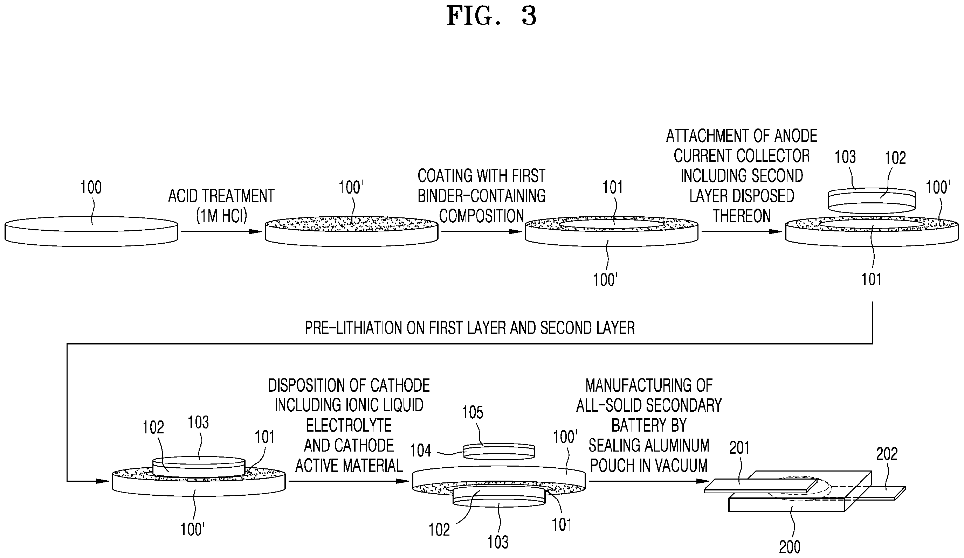

FIG. 2 is a flowchart describing a method of manufacturing an all-solid battery in detail along with a method of manufacturing an anode and a solid electrolyte layer according to an embodiment. FIG. 3 is a flowchart schematically describing a method of manufacturing an all-solid battery according to an embodiment.

As shown in FIGS. 2 and 3, a molded body 100 for a solid electrolyte is prepared. The molded body 100 for the solid electrolyte may be manufactured by, for example, heat-treating a precursor of a solid electrolyte material, such as an oxide-based solid electrolyte material.

The oxide-based solid electrolyte may be manufactured by contacting a precursor in a stoichiometric amount to form a mixture and heat-treating the mixture. The contact may include, for example, milling including ball milling, or pulverization. A mixture of precursors mixed in a stoichiometric composition may be subjected to a first heat treatment in an oxidizing atmosphere, so as to prepare a resultant product of the first heat treatment. The first heat treatment may be performed at a temperature within a range of less than about 1,000 °C for about 1 hour to about 36 hours. The resultant product of the first heat treatment may be pulverized. The pulverization of the resultant product of the first heat treatment may be performed in a dry or wet manner. For example, wet pulverization may be performed by mixing a solvent, such as methanol, with the resultant product of the first heat treatment, followed by milling the mixture with a ball mill for about 0.5 hours to about 10 hours. For example, dry pulverization may be performed by milling with a ball mill without a solvent. The pulverized resultant product of the first heat treatment may have a particle diameter in a range of about 0.1 $\mu$m to about 10 $\mu$m, or about 0.1 $\mu$m to about 5 $\mu$m. The pulverized resultant product of the first heat treatment may then be dried. The pulverized resultant product of the first heat treatment may be mixed with a binder solution and molded in the form of pellets, or may be simply pressed at a pressure in a range of about 1 ton to about 10 tons to be molded into pellets. The molded pellets may be subjected to a second heat treatment at a temperature of less than or equal to about 1,000 °C for about 1 hour to about 36 hours. As a sintered product resulting from the second heat treatment, the molded body 100 for a solid electrolyte may be obtained. The second heat treatment may be, for example, performed at a temperature in a range of about 550 °C to about 1,000 °C. The time for the second heat treatment may be about 1 hour to about 36 hours. To obtain a sintered product, the temperature of the second heat treatment may be greater than that of the first heat treatment. For example, the temperature of the second heat treatment may be greater than that of the first heat treatment, by greater than or equal to about 10 °C, greater than or equal to about 20 °C, greater than or equal to about 30 °C, or greater than or equal to about 50 °C. The molded body 100 may be subjected to the second heat treatment in an oxidizing atmosphere, a reducing atmosphere, or a combination thereof. Alternatively, the oxide-based solid electrolyte may be manufactured using a tape casting method. For example, an oxide solid electrolyte slurry may be prepared by mixing an oxide-based solid electrolyte powder with a binder and a solvent. The oxide solid electrolyte slurry may be then subjected to ball milling for 12 hours to 24 hours and aging for about 1 hour to about 4 hours. The aged oxide solid electrolyte slurry may be poured onto a doctor blade set to a predetermined height, and tape casting may be performed by moving a polyethylene terephthalate (PET) substrate film at a speed in a range of about 1.0 meter per minute (m/min) to about 3.0 m/min, so as to obtain a green sheet having a thickness of several tens of micrometers. The green sheet may be sintered at a temperature in a range of about 1,000 °C to about 1,350 °C after lamination, pressing, and cutting, so as to obtain a sintered product. Then, the molded body 100 for a solid electrolyte having a thickness of several hundred micrometers may be prepared by putting the sintered product in a mold and applying pressure thereto.

The molded body 100 for the solid electrolyte layer may be treated with acid, and the acid-treated molded body may be dried, so as to obtain a solid electrolyte layer 100' having a porous first surface and optionally a porous second surface thereof. For the acid treatment, hydrochloric acid, phosphoric acid, sulfuric acid, nitric acid, hydrofluoric acid, or a mixture thereof, may be used. For example, the acid treatment may be performed at a concentration in a range of about 0.1 molar (M) to about 10 M for about 30 minutes to about 1 hour. For example, the acid treatment may be performed with hydrochloric acid at a concentration in a range of about 0.1 M to about 1 M for about 30 minutes to about 1 hour. After the acid treatment, the resultant product may be washed using a basic compound, such as ethanol, and then the washed product may be dried in a drying room, so as to obtain the solid electrolyte layer 100' having the porous the first surface and optionally the porous second surface thereof.

A first layer 101 may be formed by coating the first surface of the solid electrolyte layer 100' with a first binder-containing composition. The first layer 101 may be a continuous layer or a non-continuous layer and include a water-soluble first binder on at least a portion of the porous first surface of the solid electrolyte layer 100'. The first binder-containing composition may include the above-described water-soluble binder. Additionally, the first binder-containing composition may include an aqueous solution containing the above-described metal or metalloid, the carbon material, or a mixture thereof. For example, the first binder-containing composition may include an aqueous solution containing the first binder and a carbon material such as carbon black. The applying of the first binder-containing composition may be performed by a casting method or a bar-coating method, but is not limited thereto. Any coating method available in the art may be used. The porous first surface of the solid electrolyte layer 100' comprises a pore, and the pore may be filled greater than or equal to about 50 %, greater than or equal to about 55 %, greater than or equal to about 60 %, greater than or equal to about 65 %, greater than or equal to about 70 %, greater than or equal to about 75 %, greater than or equal to about 80 %, greater than or equal to about 85 %, greater than or equal to about 90 %, or greater than or equal to about 95 %, with the first layer 101 of the interlayer, based on a total porosity of the porous first surface of the solid electrolyte layer. For example, the pore (i.e., pores) of the solid electrolyte layer 100' may be completely filled with the first layer 101. The pores of the solid electrolyte layer 100' may be easily penetrated due to the first binder-containing composition having good wettability, so that the contact area with the solid electrolyte layer 100' may be increased. In addition, the first binder-containing composition may be applied on the surface of the solid electrolyte layer 100', so as to form the first layer 101 as a continuous layer or a non-continuous layer. An amount of the first binder may be about 1 wt% to about 20 wt%, based on 100 wt% of the first layer 101. For example, the amount of the first binder may be, in a range of about 1 wt% to about 18 wt%, about 1 wt% to about 16 wt%, about 1 wt% to about 14 wt%, about 1 wt% to about 12 wt%, about 1 wt% to about 10 wt%, about 1 wt% to about 9 wt%, about 1 wt% to about 8 wt%, or about 1 wt% to about 7 wt%, based on 100 wt% of the first layer 101.

An organic second binder-containing composition may be disposed (e.g., coated) on the first layer 101 to form a second layer 102. An anode current collector 103, may be disposed on (e.g., attached to) the second layer 102, followed by compressing the anode current collector 103, the second layer 102, the first layer 101, and the solid electrolyte layer 100' to form a compressed body in which the anode current collector, the second layer, the first layer, and the solid electrolyte layer, are sequentially disposed, and drying the compressed body to obtain a laminated body. An amount of the second binder may be, about 1 wt% to about 15 wt%, based on 100 wt% of the second layer 102. For example, the amount of the second binder may be, in a range of about 1 wt% to about 14 wt%, about 1 wt% to about 13 wt%, about 1 wt% to about 11 wt%, about 1 wt% to about 9 wt%, or about 1 wt% to about 7 wt%, based on 100 wt% of the second layer 102. Each of the first layer 101 and the second layer 102 may have a thickness in a range of about 1 $\mu$m to about 20 $\mu$m. For example, each of the first layer 101 and second layer 102 may have a thickness in a range of about 1 $\mu$m to about 18 $\mu$m, about 1 $\mu$m to about 16 $\mu$m, about 1 $\mu$m to about 14 $\mu$m, about 1 $\mu$m to about 12 $\mu$m, about 1 $\mu$m to about 10 $\mu$m, about 1 $\mu$m to about 8 $\mu$m, about 1 $\mu$m to about 6 $\mu$m, or 1 about $\mu$m to about 5 $\mu$m.

To the first layer 101 in a wet state, the second layer 102 comprising the second binder-containing composition disposed on the anode current collector 103 may be attached. In this way, after drying, the first layer 101 may form a stronger intercalation bond with the anode current collector 103 on which the second layer 102 are disposed. In addition, since the anode current collector 103 on which the second layer 102 is disposed is attached to the first layer 101 in a wet state, the compressing may be performed with simple clips without requiring an additional process such as cold isostatic pressing (CIP) and/or warm isostatic pressing (WIP). Accordingly, there is no problem in cost and mass production related to the additional process. Drying may be performed under vacuum.

By disposing (e.g., placing) the laminated body in a pouch, and wrapping the pouch with a lithium-containing foil, followed by lithiating the laminated body at a temperature in a range of about 25 °C to about 60 °C, a pre-lithiated laminated body is obtained. The reason why the pre-lithiation process is performed is that a lithium battery according to an embodiment is easily shorted due to repetitive charging and discharging on a "Li-free" (or anode-free) structure and the initial coulombic efficiency (ICE) is lowered. The pre-lithiation process may be performed by wrapping the solid electrolyte layer 100' to which the first layer 101 and the second layer 102 are attached and the anode current collector 103 with a lithium-containing foil. Under the condition that direct electrical contact is realized between the anode current collector 103 and lithium metal, electrons move in a direction as shown in FIG. 2 due to a potential difference between lithium metal and a carbon material such as carbon black. Lithium ions from the lithium metal may be released into the solid electrolyte layer 100'. To obtain charge neutrality, the lithium ions of the solid electrolyte layer 100' may be inserted into the carbon material so that lithium may be plated (LiCe).

After removing the lithium-containing foil from the pouch, and removing the pre-lithiated laminated body from the pouch, a cathode including the cathode active material layer 104 and the cathode current collector 105 may be disposed on the solid electrolyte layer 100', so as to manufacture a battery. The cathode active material layer 104 may include the above-described ionic liquid electrolyte and the cathode active material. The ionic liquid electrolyte may be impregnated into the pores in the second porous surface of the solid electrolyte layer 100' in contact with the cathode active material layer 104 and into the cathode. The battery assembly of the pre-lithiated laminated body and the cathode may be placed into an aluminum pouch in vacuum, and then sealed, thereby completing the manufacture of the battery. Here, a part of the cathode current collector 105 and a part of the anode current collector 103 may each be protruded out of the aluminum pouch, not to break the vacuum of the battery, and these protrusions are used as a cathode terminal and an anode terminal.

Hereinafter, the disclosure will be described in more detail through the following examples, but is not meant to be limited to the following examples.

EXAMPLES

Example 1: Manufacture of all-solid secondary battery

Manufacture of anode and solid electrolyte layer

Carbon black (CB, Asahi Co., Japan) was added to an N-methyl-2-pyrrolidone (NMP) mixture in which 5 % polyvinylidene fluoride (PVDF, Solvey Co.) as a second binder was dissolved, and the mixed solution was stirred by using a mixer (Thinky Corporation, AR-100) to prepare a second binder-containing composition. After the second binder-containing composition was coated on a 10 $\mu$m-thick stainless steel (SUS) foil for an anode current collector by using a doctor blade, a first drying process was performed thereon at 60 °C for 30 minutes, followed by a second drying process at 120 °C for 2 hours in vacuum, to prepare an SUS-foil for an anode current collector on which a second layer comprising the second binder-containing composition is disposed. In the second layer, amounts of CB and PVDF as the second binder were 93 wt% and 7 wt%, respectively. A thickness of the second layer was about 10 $\mu$m.

Separately, by using a tape casting method, 500 $\mu$m-thick pellets of $Li_{6.5}La_3Zr_{1.5}Ta_{0.5}O_{12}$ (LLZO, Toshima Co.) solid electrolyte were prepared. The LLZO solid electrolyte was acid-treated with 1 M hydrochloric acid for 30 minutes, washed by using ethanol, and dried in a drying room, to obtain pellets of the $Li_{6.5}LaZr_{1.5}Ta_{0.5}O_{12}$ solid electrolyte having pores in a surface thereof.

Separately, CB (Asahi Co., Japan) was added to an aqueous solution containing polyvinyl alcohol grafted polyacrylic acid (PVA-g-10PAA), i.e. polyvinyl alcohol grafted with polyacrylic acid as a first binder, and the mixed solution was stirred by using a mixer (Thinky Corporation, AR-100) to prepare a first binder-containing composition. According to the method disclosed in reference (J. He, L. Zhang, Journal of Alloys and Compounds 763 (2018) 228-240), the PVA-g-10PAA was synthesized by graft polymerization of an acrylic acid monomer to the polyvinyl alcohol backbone. The first binder-containing composition was coated on the pellets of the $Li_{6.5}La_3Zr_{1.5}Ta_{0.5}O_{12}$ solid electrolyte having pores in the surface thereof, so that the first layer completely filled the pores of the LLZO electrolyte, and the first layer having a continuous layer and having a thickness of about 1 $\mu$m was formed on the surface of the solid electrolyte. In the first layer, amounts of CB and PVA-g-10PAA as the first binder were 93 wt% and 7 wt%, respectively.

Without drying the first layer, the SUS-foil as an anode current collector on which the second layer was disposed was attached to the first layer, and the upper and lower surfaces were compressed with a clip. Then, a drying process was performed thereon in vacuum at 20 °C for 10 minutes, so as to obtain a laminated body in which 10 $\mu$m-thick the SUS-foil as the anode current collector, 10 $\mu$m-thick the second layer (CB + PVDF), 1 $\mu$m-thick the first layer (CB + PVA-g-10PAA), and 500 $\mu$m-thick the solid electrolyte layer were sequentially disposed.

The laminated body was placed in a sealed aluminum pouch, the pouch was wrapped with a LiCu foil, and then the laminated body was lithiated at 60 °C for 2 hours to obtain a pre-lithiated laminated body. By removing the LiCu foil and the pouch from the pre-lithiated laminated body, a 521 $\mu$m-thick anode and a solid electrolyte layer, i.e. 21 $\mu$m-thick the anode and 500 $\mu$m-thick the solid electrolyte layer were manufactured.

Manufacture of cathode

As a cathode active material, LiCoO$_2$ (LCO) was prepared. As a conductive material, CB (Cabot) and graphite (SFG6, Timcal) were prepared. As a binder, polytetrafluoroethylene (Dupont's Teflon (registered trademark)) was prepared. Subsequently, these materials, i.e., the cathode active material, CB, graphite, and the binder, were mixed at a mass ratio of 93:3:1:3. The mixture was stretched in the form of a sheet to prepare a cathode active material sheet. In addition, the cathode active material sheet was compressed on a cathode current collector consisting of a 12 $\mu$m-thick aluminum foil to prepare a cathode layer.

The cathode active material layer included in the cathode layer was impregnated with an ionic liquid electrolyte in which 2.0 M lithium bis(fluorosulfonyl)imide (LiFSI) was dissolved in 5 microliters ($\mu$L) of N-propyl-N-methyl-pyrrolidinium bis(fluorosulfonyl)imide (PYR13FSI) to manufacture a cathode.

Manufacture of all-solid secondary battery

The cathode was disposed on the laminated body of the anode and the solid electrolyte layer, and then sealed in an aluminum pouch in vacuum, to manufacture an all-solid secondary battery. Here, a part of the cathode current collector and a part of the anode current collector were each protruded out of the aluminum pouch, not to break the vacuum of the battery. By having these protrusions as a cathode terminal and an anode terminal, an all-solid secondary battery was manufactured.

Example 2: Manufacture of all-solid secondary battery

A silver nanoparticle (AgNP, D50 = 60 nm, Dowa Co.) and CB (Asahi Co., Japan) were added at a weight ratio of 1:2 to an NMP mixture in which 7 % PVDF (Sigma Aldrich) as a second binder was dissolved, and the mixed solution was stirred by using a mixer (Thinky Corporation, AR-100) to prepare a second binder-containing composition. By using the second binder-containing composition, an SUS-foil for an anode current collector on which a second layer was disposed by using the second binder-containing composition was prepared. Then, an all-solid secondary battery was manufactured in the same manner as in Example 1, except that a laminated body obtained by sequentially disposing 10 $\mu$m-thick an SUS-foil for an anode current collector, 12 $\mu$m-thick the second layer (AgNP+ CB + PVDF), 1 $\mu$m-thick the first layer (CB + PVA-g-10PAA), and 500 $\mu$m-thick the solid electrolyte layer was used to manufacture a 523 $\mu$m-thick anode and a solid electrolyte layer.

Comparative Example 1: Manufacture of all-solid secondary battery

An all-solid secondary battery was manufactured in the same manner as in Example 1, except that a copper foil as an anode current collector was attached to the 500 $\mu$m-thick pellets of Li$_{6.5}$La$_3$Zr$_{1.5}$Ta$_{0.5}$O$_{12}$ (LLZO, Toshima Co.) solid electrolyte prepared by using a casting method and that a laminated body in which the copper foil s an anode current collector and a solid electrolyte later were sequentially disposed was obtained by applying a pressure of 250 megapascals (MPa) thereto at 25 °C for 3 minutes according to a cold isostatic pressing (CIP) method.

Comparative Example 2: Manufacture of all-solid secondary battery

A 2.5 $\mu$m-thick graphite layer was formed by pencil graphite drawing on the 500 $\mu$m-thick pellets of Li$_{6.5}$La$_3$Zr$_{1.5}$Ta$_{0.5}$O$_{12}$ (LLZO, Toshima Co.) solid electrolyte prepared by using a casting method. By directly contacting the graphite layer to a lithium metal until the entire graphite layer turned gold, a lithiated graphite (Gr) layer as a first layer was formed on the LLZO solid electrolyte pellets. An all-solid secondary battery was manufactured in the same manner as in Example 1, except that a copper foil as an anode current collector was attached to the pellets of LLZO solid electrolyte and that a laminated body in which the copper foil as an anode current collector, the first layer (lithiated Gr layer), and the solid electrolyte layer were sequentially disposed was obtained by applying a pressure of 250 MPa thereto at 25 °C for 3 minutes by using a CIP method.

Comparative Example 3: Manufacture of all-solid secondary battery

In the same manner as the first binder-containing composition, a second binder-containing composition was prepared in a way that CB (Asahi Co., Japan) was added to a PVA-g-10PAA binder-containing aqueous solution and then stirred. According to the method disclosed in reference (J. He, L. Zhang, Journal of Alloys and Compounds 763 (2018) 228-240), the PVA-g-10PAA was synthesized by graft polymerization of an acrylic acid monomer to the polyvinyl alcohol backbone. By using the second binder-containing composition, an SUS-foil as an anode current collector on which a second layer was disposed was prepared. Then, an all-solid secondary battery was manufactured in the same manner as in Example 1, except that a laminated body obtained by sequentially disposing the SUS-foil as an anode current collector, the second layer (CB + PVA-g-10PAA), a first layer (CB + PVA-g-10PAA), and a solid electrolyte layer was used to manufacture a 521 $\mu$m-thick anode and a solid electrolyte layer.

Comparative Example 4: Manufacture of all-solid secondary battery

A first binder-containing composition was prepared in the same manner as the second binder-containing composition in a way that CB (Asahi Co., Japan) was added to a mixture in which 5 % PVDF (Solvey Co.) as a second binder was dissolved in NMP and then stirred. The first binder-containing composition was coated on the pellets of $Li_{6.5}La_3Zr_{1.5}Ta_{0.5}O_{12}$ solid electrolyte having pores in a surface thereof, and accordingly, a first layer which is a continuous layer and includes the first binder on at least a portion of the surface and in pores of the LLZO solid electrolyte were formed. Then, an all-solid secondary battery was manufactured in the same manner as in Example 1, except that a laminated body obtained by sequentially disposing the SUS-foil as an anode current collector, the second layer (CB + PVDF), the first layer (CB + PVDF), and the solid electrolyte layer was used to manufacture a 521 $\mu$m-thick anode and a solid electrolyte layer.

Comparative Example 5: Manufacture of all-solid secondary battery

In the same manner as the first binder-containing composition, a second binder-containing composition was prepared in a way that CB (Asahi Co., Japan) was added to a PVA-g-10PAA binder-containing aqueous solution and then stirred. According to the method disclosed in reference (J. He, L. Zhang, Journal of Alloys and Compounds 763 (2018) 228-240), the PVA-g-10PAA was synthesized by graft polymerization of an acrylic acid monomer to the polyvinyl alcohol backbone. An SUS-foil as an anode current collector on which a second layer coated with the second binder-containing composition was disposed was prepared.

A first binder-containing composition was prepared in the same manner as the second binder-containing composition in a way that CB (Asahi Co., Japan) was added to an NMP mixture in which 5 % PVDF (Solvey Co.) was dissolved, and then stirred. The first binder-containing composition was coated on the pellets of $Li_{6.5}La_3Zr_{1.5}Ta_{0.5}O_{12}$ solid electrolyte having pores in the surface thereof, and accordingly, a first layer which is a continuous layer and includes the first binder on at least a portion of the surface and in pores of the LLZO solid electrolyte was formed.

Then, an all-solid secondary battery was manufactured in the same manner as in Example 1, except that a laminated body obtained by sequentially disposing the SUS-foil as an anode current collector, the second layer (CB + PVA-g-10PAA), the first layer (CB +PVDF), and the solid electrolyte layer was used to manufacture a 521 $\mu$m-thick anode and a solid electrolyte layer.

Evaluation Example 1: Scanning electron microscopy and energy-dispersive X-ray spectroscopy (EDX)

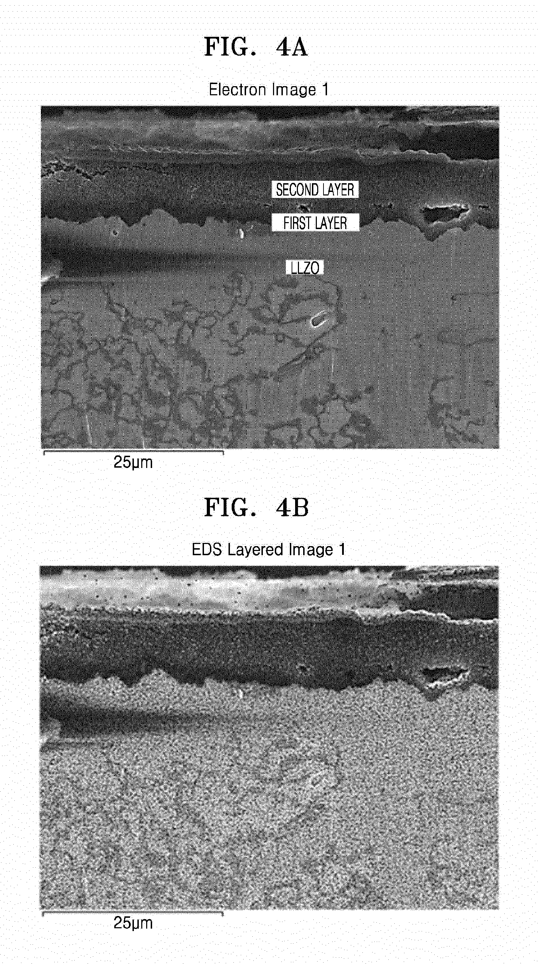

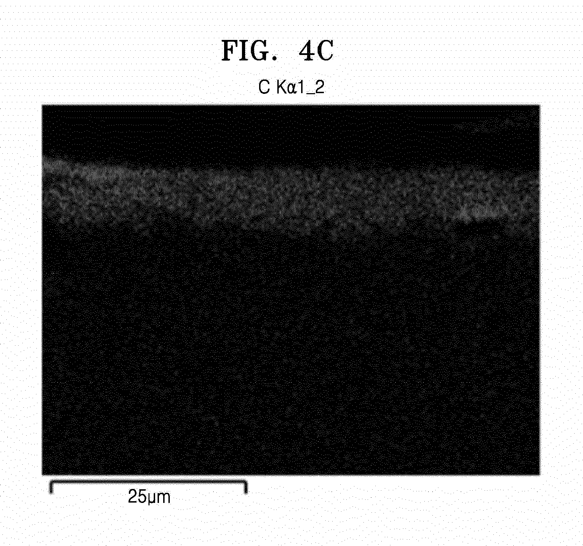

The all-solid secondary battery manufactured according to Example 1 was disassembled in a thermostatic bath at 25 °C. A cross-section of the all-solid secondary battery was polished using an ion milling machine, and then observed with a scanning electron microscope (SEM). FIGS. 4A and 4B each show SEM/EDX images of cross-sections of the anode and the solid electrolyte layer that are manufactured in Example 1. FIG. 4C is an EDX mapping image for carbon in the anode and the solid electrolyte layer that are manufactured in Example 1.

Referring to FIGS. 4A and 4B, it was confirmed that, as the anode and the solid electrolyte layer that were manufactured in Example 1, an anode current collector, a second layer, a first layer, and a solid electrolyte layer were sequentially disposed. Referring to FIG. 4C, it was confirmed that carbon continuously exists in the second layer and the first layer.

Evaluation Example 2: Charging/discharging characteristics

The all-solid secondary batteries manufactured according to Examples 1 and 2 and Comparative Examples 1 to 5 were charged and discharged in a thermostatic bath at 25 °C.

For the 1st cycle, each all-solid secondary battery was charged with a constant current of 0.3 milliampere per square centimeter (mA/cm$^2$) until the battery voltage reached 4.5 volts (V). Next, each all-solid secondary battery was discharged with a constant current of 0.3 mA/cm$^2$ until the battery voltage reached 2.7 V.

For the 2nd to 4th cycles, each all-solid secondary battery was charged with a constant current of 0.5 mA/cm² until the battery voltage reached 4.5 V. Next, each all-solid secondary battery was discharged with a constant current of 0.5 mA/cm² until the battery voltage reached 2.7 V.

For the 5th to 7th cycles, each all-solid secondary battery was charged with a constant current of 1.0 mA/cm² until the battery voltage reached 4.5 V. Next, each all-solid secondary battery was discharged with a constant current of 1.0 mA/cm² until the battery voltage reached 2.7 V.

For the 8th to 10th cycles, each all-solid secondary battery was charged with a constant current of 1.6 mA/cm² until the battery voltage reached 4.5 V. Next, each all-solid secondary battery was discharged with a constant current of 1.6 mA/cm² until the battery voltage reached 2.7 V.

For the 11th to 13th cycles, each all-solid secondary battery was charged with a constant current of 2.0 mA/cm² until the battery voltage reached 4.5 V. Next, each all-solid secondary battery was discharged with a constant current of 2.0 mA/cm² until the battery voltage reached 2.7 V.

For the 14th to 16th cycles, each all-solid secondary battery was charged with a constant current of 2.5 mA/cm² until the battery voltage reached 4.5 V. Next, each all-solid secondary battery was discharged with a constant current of 2.5 mA/cm² until the battery voltage reached 2.7 V.

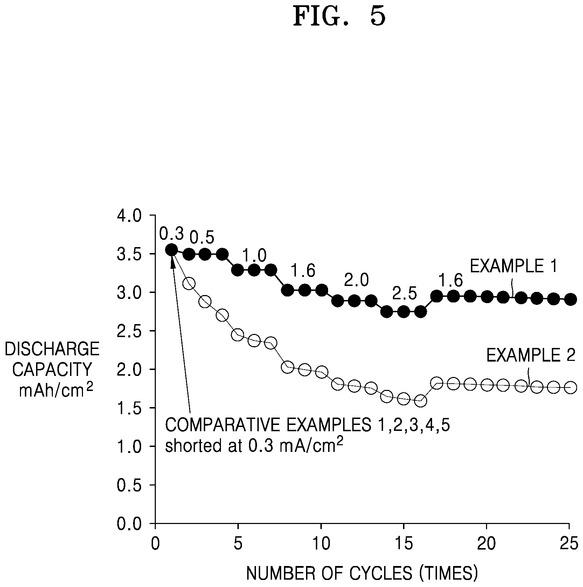

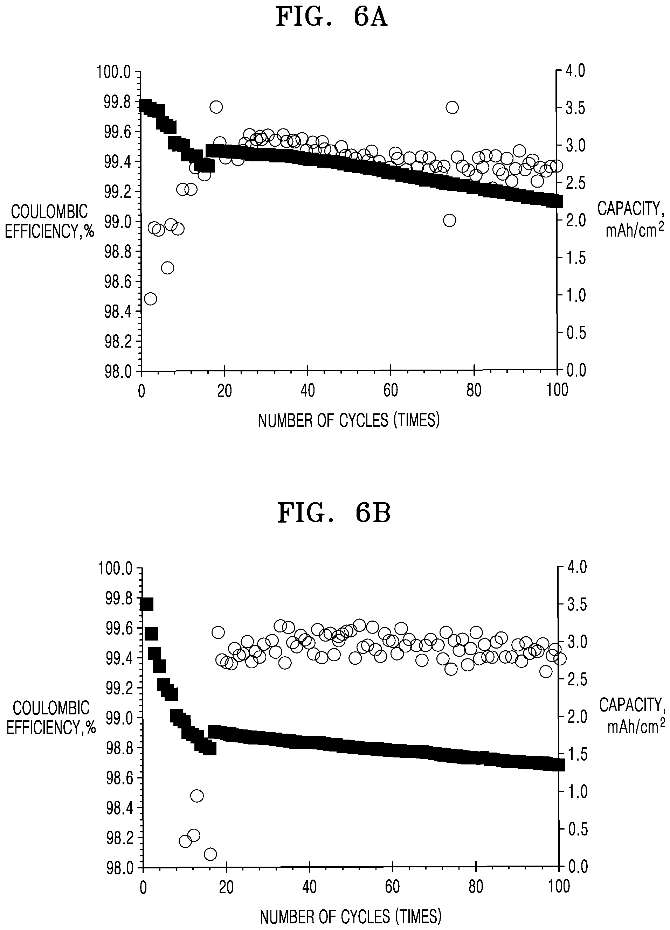

Following the 17th cycle, each all-solid secondary battery was charged with a constant current of 1.6 mA/cm² until the battery voltage reached 4.5 V. Subsequently, each all-solid secondary battery was discharged repeatedly with a constant current of 1.6 mA/cm² until the battery voltage reached 2.7 V, and then the critical current density (CCD) was investigated. The critical current density (CCD), refers to the current density a lithium battery can withstand through cycling without cell failure caused by a short circuit. A total of 25 cycles of charging and discharging were performed. Following the 25 cycles, the capacity retention and occurrence of short circuit in each all-solid secondary battery were evaluated, and results thereof are shown in Table 1 and FIG. 5. Subsequently, following the 25th cycle, the charging and discharging were performed repeatedly in the same manner as described above after the 17th cycle. Consequently, a total of 100 cycles of charging and discharging were performed. For the all-solid secondary batteries of Examples 1 and 2, the coulombic efficiency was calculated according to Equation 1. The capacity retention at the 25th or 100th cycle was calculated according to Equation 2. The calculation results are shown in FIGS. 6A and 6B, respectively.

Equation 1

Coulombic efficiency (%)= (discharge capacity at each cycle/charge capacity at each cycle)×100%

Equation 2

Capacity retention (%)=(discharge capacity after 25th or 100th cycle/discharge capacity at 17th cycle) × 100%

Table 1

|  | Capacity retention (%) (@ 25th cycle @ 1.6 mA/cm²) |
| --- | --- |
| Example 1 | 95.4 |
| Example 2 | 91.5 |
| Comparative Example 1 | Shorted |
| Comparative Example 2 | Shorted |
| Comparative Example 3 | Shorted |
| Comparative Example 4 | Shorted |
| Comparative Example 5 | Shorted |

Referring to Table 1 and FIG. 5, it was confirmed that the all-solid secondary batteries manufactured according to Examples 1 and 2 had excellent capacity retention of 91.5 % or greater after the 25th cycle. In comparison, the all-solid secondary batteries manufactured according to Comparative Examples 1 to 5 had been all shorted. Also, the all-solid secondary battery manufactured according to Comparative Example 5 had been shorted due to high reactivity between the solid electrolyte layer and PVDF which is an organic-based binder.

Referring to FIGS. 6A and 6B, the coulombic efficiency of the all-solid secondary batteries manufactured according to Examples 1 and 2 at the 100th cycle was 99.4 % and 99.5 %, respectively.

According to an embodiment, an all-solid battery including an anode current collector, a solid electrolyte layer, and an interlayer including a first layer disposed between the anode current collector and the solid electrolyte layer and a second layer disposed on the first layer facing the anode current collector, wherein the first layer is either a continuous layer or a non-continuous layer and includes a water-soluble first binder on at least a portion of a porous surface of the solid electrolyte layer. By improving a contact between the anode current collector and the solid electrolyte layer, the all-solid battery may have improved charge/discharge characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. An all-solid battery comprising:

   a cathode comprising a cathode active material layer;
   an anode comprising an anode current collector, and an interlayer disposed on the anode current collector; and
   a solid electrolyte layer disposed between the cathode and the anode, the solid electrolyte layer comprising a porous first surface facing the anode, and an opposite second surface,
   wherein the interlayer of the anode faces the solid electrolyte layer, and the interlayer comprises a first layer and a second layer disposed on the first layer, the second layer facing the anode current collector,
   wherein the first layer comprises a water-soluble first binder on at least a portion of the porous first surface of the solid electrolyte layer, and
   wherein the second layer comprises an organic second binder.

2. The all-solid battery of claim 1, wherein the second surface of the solid electrolyte layer faces the cathode and is porous.

3. The all-solid battery of claims 1 or 2, wherein the first binder comprises polyvinyl alcohol, polyacrylic acid, polymethacrylic acid, polyvinyl alcohol grafted with polyacrylic acid, polyvinyl alcohol grafted with polymethacrylic acid, carboxymethylcellulose, polyimide, a copolymer thereof, or a combination thereof.

4. The all-solid battery of any of claims 1-3, wherein the first layer is a continuous layer and is disposed on the first surface of the solid electrolyte layer, and
   the second layer is a continuous layer and is disposed between the first layer and the anode current collector.

5. The all-solid battery of any of claims 1-4, wherein the porous first surface of the solid electrolyte layer is filled 50 percent or greater with the first layer of the interlayer, based on a total porosity of the porous first surface of the solid electrolyte layer;
   preferably wherein the porous first surface of the solid electrolyte layer is completely filled with the first layer of the interlayer.

6. The all-solid battery of any of claims 1-5, wherein an amount of the first binder is, in a range of 1 weight percent to 20 weight percent, based on 100 weight percent of the first layer; and/or

   wherein the second binder comprises polyvinylidene fluoride, a copolymer of vinylidene fluoride and hexafluoropropylene, polyisobutylene, polyethylene, polypropylene, a copolymer thereof, or a combination thereof; and/or
   wherein an amount of the second binder is in a range of 1 weight percent to 15 weight percent, based on 100 weight percent of the second layer.

7. The all-solid battery of any of claims 1-6, wherein the first layer and the second layer each independently further comprise:

   a metal or a metalloid comprising silver, gold, platinum, palladium, silicon, aluminum, bismuth, tin, zinc, or a combination thereof;
   a carbon material comprising carbon black, graphite, graphene, a single-walled carbon nanotube, a double-walled carbon nanotube, a multi-walled carbon nanotube, or a combination thereof; or
   a combination of the carbon material and the metal or metalloid.

8. The all-solid battery of any of claims 1-7, wherein each of the first layer and the second layer has a thickness in a range of 1 micrometer to 30 micrometers; and/or
   wherein the solid electrolyte layer comprises an oxide solid electrolyte, a sulfide solid electrolyte, a polymer solid electrolyte, or a combination thereof.

9. The all-solid battery of any of claims 1-8, wherein the solid electrolyte layer comprises $Li_{1+x+y}Al_xTi_{2-x}Si_yP_{3-y}O_{12}$ wherein $0<x<2$ and $0\leq y<3$, $BaTiO_3$, $Pb(Zr_pTi_{1-p})O_3$ wherein $0\leq p\leq 1$, $Pb_{1-x}La_xZr_{1-y}Ti_yO_3$ wherein $0\leq x<1$ and $0\leq y<1$, $Pb(Mg_{1/3}Nb_{2/3})O_3-PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ wherein $0<x<2$ and $0<y<3$, $Li_xAl_yTi_z(PO_4)_3$ wherein $0<x<2$, $0<y<1$, and $0<z<3$, $Li_{1+x+y}(Al_pGa_{1-p})_x(Ti_qGe_{1-q})_{2-x}Si_yP_{3-y}O_{12}$ wherein $0\leq x\leq 1$, $0\leq y\leq 1$, $0\leq p\leq 1$ and $0\leq q\leq 1$, $Li_xLa_yTiO_3$ wherein $0<x<2$ and $0<y<3$, $Li_2O$, $LiOH$, $Li_2CO_3$, $LiAlO_2$, $Li_2O-Al_2O_3-SiO_2-P_2O_5-TiO_2-GeO_2$, $Li_{3+x}La_3M_2O_{12}$ wherein M is Te, Nb, or Zr, and x is an integer from 1 to 10, or a combination thereof.

10. The all-solid battery of any of claims 1-9, wherein after discharging the all-solid battery, the first layer and second layer each independently comprise a metal or a metalloid, a carbon material, an alloy thereof with lithium, a composite thereof, or a combination thereof.

11. A method of manufacturing an all-solid battery, the method comprising:

    providing a molded body for a solid electrolyte layer;
    acid-treating the molded body;
    drying the acid-treated molded body to obtain a solid electrolyte layer comprising a porous first surface and optionally a porous second surface thereof;
    applying a first binder-containing composition on at least a portion of the porous first surface of the solid electrolyte layer to form a first layer, wherein the first binder-containing composition comprises an aqueous solution of the first binder;
    disposing an organic second binder-containing composition on the first layer to form a second layer;
    disposing an anode current collector on the second layer; followed by
    compressing the anode current collector, the second layer, the first layer, and the solid electrolyte layer to form a compressed body in which the anode current collector, the second layer, the first layer, and the solid electrolyte layer are sequentially disposed;
    drying the compressed body to obtain a laminated body;
    disposing the laminated body in a pouch;
    wrapping the pouch with a lithium-containing foil; followed by
    lithiating the laminated body at a temperature in a range of 25 °C to 60 °C, so as to obtain a pre-lithiated laminated body;
    removing the pre-lithiated laminated body from the pouch; and
    disposing the solid electrolyte layer of the pre-lithiated laminated body on a cathode comprising a cathode active material layer, to manufacture the all-solid battery.

12. The method of claim 11, wherein

    the first binder comprises polyvinyl alcohol, polyacrylic acid, polymethacrylic acid, polyvinyl alcohol grafted polyacrylic acid, polyvinyl alcohol grafted polymethacrylic acid, carboxymethylcellulose, polyimide, a copolymer thereof, or a combination thereof, and
    the second binder comprises polyvinylidene fluoride, a copolymer of vinylidene fluoride and hexafluoropropylene, polyisobutylene, polyethylene, polypropylene, a copolymer thereof, or a combination thereof.

13. The method of claims 11 or 12, wherein an amount of the first binder is in a range of 1 weight percent to 20 weight percent, based on 100 weight percent of the first layer; and/or
wherein an amount of the second binder is in a range of weight percent to 15 weight percent, based on 100 weight percent of the second layer.

14. The method of any of claims 11-13, wherein the first layer and the second layer each independently further comprise:

a metal or a metalloid comprising silver, gold, platinum, palladium, silicon, aluminum, bismuth, tin, zinc, or a combination thereof;
a carbon material comprising carbon black, acetylene black, furnace black, ketjen black, graphite, graphene, a single-walled carbon nanotube, a double-walled carbon nanotube, a multi-walled carbon nanotube, or a combination thereof; or
a combination hereof.

15. The method of any of claims 11-14, wherein the solid electrolyte layer comprises $Li_{1+x+y}Al_xTi_{2-x}Si_yP_{3-y}O_{12}$ wherein $0<x<2$ and $0\leq y<3$, $BaTiO_3$, $Pb(Zr_pTi_{1-p})O_3$ wherein $0\leq p\leq1$, $Pb_{1-x}La_xZr_{1-y}Ti_yO_3$ wherein $0\leq x<1$ and $0\leq y<1$, $Pb(Mg_{1/3}Nb_{2/3})O_3$-$PbTiO_3$, $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ wherein $0<x<2$ and $0<y<3$, $Li_xAl_yTi_z(PO_4)_3$ wherein $0<x<2$, $0<y<1$, and $0<z<3$, $Li_{1+x+y}(Al_pGa_{1-p})_x(Ti_qGe_{1-q})_{2-x}Si_yP_{3-y}O_{12}$ wherein $0\leq x\leq1$, $0\leq y\leq1$, $0\leq p\leq1$ and $0\leq q\leq1$, $Li_xLa_yTiO_3$ wherein $0<x<2$ and $0<y<3$, $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ wherein M is Te, Nb, or Zr, and x is an integer from 1 to 10, or a combination thereof.

# FIG. 1A

# FIG. 1B

# FIG. 2

SOLID ELECTROLYTE → ACID TREATMENT → SOLID ELECTROLYTE → COATING WITH FIRST BINDER-CONTAINING COMPOSITION →

FIRST BINDER-CONTAINING COMPOSITION (CB+WATER+FIRST BINDER)

SOLID ELECTROLYTE

FIRST BINDER-CONTAINING COMPOSITION

ANODE CURRENT COLLECTOR SECOND LAYER

SOLID ELECTROLYTE

ATTACHMENT OF ANODE CURRENT COLLECTOR INCLUDING SECOND LAYER (SECOND BINDER-CONTAINING COMPOSITION) DISPOSED THEREON

PRESSING (P)

[P]

SOLID ELECTROLYTE
FIRST BINDER-CONTAINING COMPOSITION
SECOND LAYER
ANODE CURRENT COLLECTOR

[P]

VACUUM DRYING

SOLID ELECTROLYTE
FIRST LAYER
SECOND LAYER
ANODE CURRENT COLLECTOR

PRE-LITHIATION IN VACUUM →

Cu
Li Li$^0$ → Li$^+$ +e →
Li$^+$ SOLID ELECTROLYTE Li$^+$ e
CB(Li) Li$^+$+e+C→Li$^0$(LiC$_6$)
ANODE CURRENT COLLECTOR

REMOVAL OF Al POUCH →

Cu
Li Li$^0$ → Li$^+$ +e →
Li$^+$ SOLID ELECTROLYTE Li$^+$ e
CB(Li) Li$^+$+e+c→Li$^0$(LiC$_6$)
ANODE CURRENT COLLECTOR

REMOVAL OF LiCu FOIL

SOLID ELECTROLYTE
CB(Li)
ANODE CURRENT COLLECTOR

← BATTERY ASSEMBLY

CATHODE CURRENT COLLECTOR
CATHODE ACTIVE MATERIAL LAYER
IONIC LIQUID ELECTROLYTE
SOLID ELECTROLYTE
CB(Li)
ANODE CURRENT COLLECTOR

EP 4 340 053 A1

# FIG. 3

ATTACHMENT OF ANODE CURRENT COLLECTOR INCLUDING SECOND LAYER DISPOSED THEREON

100 → ACID TREATMENT (1M HCl) → 100' → COATING WITH FIRST BINDER-CONTAINING COMPOSITION → 101 / 100' → 103 102 100' / 101

PRE-LITHIATION ON FIRST LAYER AND SECOND LAYER

102 103 101 100' → DISPOSITION OF CATHODE INCLUDING IONIC LIQUID ELECTROLYTE AND CATHODE ACTIVE MATERIAL → 105 104 100' 102 103 101 → MANUFACTURING OF ALL-SOLID SECONDARY BATTERY BY SEALING ALUMINUM POUCH IN VACUUM → 201 202 200

EP 4 340 053 A1

# FIG. 4A

Electron Image 1

SECOND LAYER

FIRST LAYER

LLZO

25μm

# FIG. 4B

EDS Layered Image 1

25μm

## FIG. 4C

C Kα1_2

25μm

# FIG. 5

## FIG. 6A

## FIG. 6B

Europäisches
Patentamt

European
Patent Office

Office européen
des brevets

# EUROPEAN SEARCH REPORT

Application Number

EP 23 18 7503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/351411 A1 (ROEV VICTOR [KR] ET AL) 11 November 2021 (2021-11-11) | 1-10 | INV. H01M4/04 |
| A | * claim 1 * * figures 1, 6A-6G * * paragraphs [0057], [0060], [0069], [0071], [0075], [0079] – [0084] * | 11-15 | H01M4/1393 H01M4/1395 H01M4/133 H01M4/134 H01M10/052 |
| Y | CN 111 146 492 A (SAMSUNG ELECTRONICS CO LTD; SAMSUNG SDI CO LTD) 12 May 2020 (2020-05-12) | 1-10 | H01M10/0562 H01M10/0585 H01M4/62 |
| A | * claims 1, 12 * * figure 1B * * paragraphs [0088], [0126] * | 11-15 | H01M10/42 |
| A | US 2022/158226 A1 (CHANG WONSEOK [KR] ET AL) 19 May 2022 (2022-05-19) * claim 1 * * paragraphs [0084], [0085], [0110], [0144] * | 1-15 | ADD. H01M4/02 H01M4/66 |

TECHNICAL FIELDS
SEARCHED (IPC)

H01M

The present search report has been drawn up for all claims

| Place of search | Date of completion of the search | Examiner |
|---|---|---|
| Munich | 26 January 2024 | Gregori, Giuliano |

EPO FORM 1503 03.82 (P04C01)

**ANNEX TO THE EUROPEAN SEARCH REPORT
ON EUROPEAN PATENT APPLICATION NO.**

EP 23 18 7503

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | | Publication date | Patent family member(s) | | Publication date |
|---|---|---|---|---|---|
| US 2021351411 | A1 | 11-11-2021 | CN | 115552685 A | 30-12-2022 |
| | | | EP | 4147293 A1 | 15-03-2023 |
| | | | US | 2021351411 A1 | 11-11-2021 |
| | | | WO | 2021225304 A1 | 11-11-2021 |
| CN 111146492 | A | 12-05-2020 | CN | 111146492 A | 12-05-2020 |
| | | | US | 2020144575 A1 | 07-05-2020 |
| US 2022158226 | A1 | 19-05-2022 | EP | 4002517 A1 | 25-05-2022 |
| | | | KR | 20220069150 A | 27-05-2022 |
| | | | US | 2022158226 A1 | 19-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HE ; L. ZHANG.** *Journal of Alloys and Compounds,* 2018, vol. 763, 228-240